# EUROPEAN PATENT APPLICATION

(11) **EP 3 945 118 A1**
(43) Date of publication of application: **02.02.2022**
(21) Application number: 20188127.3
(22) Date of filing: 28.07.2020
(51) Int. Cl.: C09D 5/18, C09D 5/02

(54) **FIRE-PROTECTION COATING COMPOSITION AND USE THEREOF**

(71) Applicant: Hilti Aktiengesellschaft, 9494 Schaan (LI)
(72) Inventor: FARRAS GUTIERREZ, Hector, 86507 Oberottmarshausen (DE)
(74) Representative: Hilti Aktiengesellschaft Corporate Intellectual Property

(57) **Abstract**

A composition for an intumescent coating comprising: (A) a binder system, comprising (a1) an aqueous polymer dispersion; and (a2) an alkoxy-functional organic polymer, which contains alkoxy-functional silane groups, and (B) an intumescent composition, as well as its use as a coating, in particular a fire-protection coating is described.

## Description

The present invention relates to a composition for an intumescent coating comprising an aqueous polymer dispersion, an alkoxy-functional organic polymer, which contains alkoxy-functional silane groups, and an intumescent compound mixture.

Compositions which form an insulating layer, also referred to as intumescent compositions, are usually applied to the surface of components to form coatings, to protect said components from fire or against the effects of intense heat, for example because of a fire. Steel constructions are now an integral part of modern architecture, even though they have a decisive disadvantage in comparison with reinforced concrete construction. Above about 500°C, the load-carrying capacity of steel is considerably reduced, i.e. the steel loses its stability and its bearing capacity. A temperature which is critical for the load-bearing capacity of the structure can be reached in approximately just 5-10 minutes depending on the fire load, for example in the case of direct exposure to fire (approximately 1000 °C). It is now the aim of fire protection, in particular of steel fire protection, to extend the period of time before the steel structure loses load-bearing capacity in the event of a fire, in order to save lives and valuable property.

In the building regulations of many countries, appropriate fire resistance durations are required for certain steel structures. They are defined as so-called F-class, such as F 30, F 60, F 90 (fire resistance classes according to DIN 4102-2) or American classes according to ASTM etc. According to DIN 4102-2, for example, F 30 means that, in the event of fire under normal conditions, a supporting steel structure must withstand the fire for at least 30 minutes. This is usually achieved by delaying the heating rate of the steel, for example, by coating the steel structure with intumescent coatings. These includes coatings whose components form a solid microporous carbon foam in the event of fire. In this case, this forms a fine-pored and thick foam layer, the so-called ash crust, which, depending on the composition, is highly thermally insulating. Thus the heating of the component is delayed, so that the critical temperature of about 500°C is reached at the earliest after 30, 60, 90, 120 minutes or up to 240 minutes. The thickness of the applied coating layer, or the ash crust developing therefrom, is crucial to attaining the required fire resistance duration. Closed profiles, such as pipes with comparable solidity, require about twice the amount compared to open profiles, such as beams with a double-T profile. For the required fire resistance times to be achieved, the coating must have a certain thickness and can form a voluminous, and thus good insulating, ash crust as possible when exposed to heat and which remains mechanically stable over the period of exposure to fire.

Various systems are proposed in the prior art for this purpose. Essentially, one distinguishes between 100% systems and solvent or aqueous systems.

In the case of the solvent or aqueous systems, a binder, usually a resin, is applied as a solution, dispersion or emulsion on the component. These may be designed as single or multi-component systems. After application, the solvent or water evaporates and leaves behind a film that dries over time. In this case, one may further distinguish between systems where there are essentially no longer changes during the drying of the coating, and systems, where, after evaporation, the binder is primarily cured by oxidation and polymerization reactions which are induced, for example, by atmospheric oxygen. The 100% systems contain the components of the binder without solvents or water. They are applied to the component, and the "drying" of the coating takes place only by the reaction of the binder components to one another.

The solvent or aqueous systems have the disadvantage that the drying times, also referred to as curing, are long, while more layers also must be applied thus requiring several operations to achieve the required layer thickness. These systems have inherent maximum thickness per coat of approximately 1 to 1.5 mm dry film thickness (DFT). The speed of evaporation is slow as there is more than 25% by volume of water in the compositions applied. Since each layer must be dried appropriately before applying the next layer, this leads first to a high expenditure of labor and correspondingly high costs and a delay in the completion of the building, because the repeated applications to achieve the required thickness depend on the climatic conditions and, in some cases, can take several days. Another disadvantage is that the coating may gravitate during drying or exposure to heat, resulting in cracking and flaking of the required layer thickness, whereby the surface may be partially exposed in a worst-case scenario, particularly in systems where the binder is not cured by evaporation of the solvent or water. Wrinkling and cracking issues also occur due to film tensions on evaporation and coalescence.

To overcome this disadvantage, two or multi-component systems based on an epoxy-amine-base have been developed that require almost no solvent, so that curing is much faster and thicker layers may also be applied in one step, so that the required layer thickness is formed much faster. However, these have the disadvantage that the binder is a very stable and rigid polymer matrix with an often high softening range, which hinders the formation of foam by the foaming agent. Thus, thick layers must be applied to generate enough foam thickness for insulation. This is in turn disadvantageous in that a high amount of material is required. To implement these systems, processing temperatures of up to +70°C are often required, which makes the use of these systems laborious and expensive to implement. In addition, some of the binder components used are toxic or otherwise critical (e.g. irritant, corrosive), such as in the case of amines or amine mixtures used in the epoxy-amine systems.

Thus, alternative systems have been developed, e.g. on the bases on silane-terminated polymers that cure in the presence of moisture or water.

WO 2010/131037 A1 discloses a composition, which is based on silane-terminated polyurethanes or silane-terminated polyethers as the binder, with compatible plasticizers and intumescent additives. This composition is cured by humidity. Accordingly, the curing of the composition begins at the surface. A similar composition is described, inter alia, in WO 2014/079873 A, WO 2015/189233 A1 and WO 2018/224317 A1. It is furthermore known from WO 10/054984 A1 to use a silicon-containing resin present in the composition, preferably in combination with an organic resin to provide an intumescent composition which gives a hard foam layer which may negate the use of fibers. However, this is disadvantageous in that the curing is highly dependent on the humidity and on the layer thickness, which generally leads to long curing times or, in very dry conditions, to no curing at all. Another disadvantage is that curing is highly inhomogeneous while the crosslinking density may also vary greatly.

The invention was therefore based on the task of creating an insulation-layer-forming coating system of the type stated initially, which avoids the aforementioned disadvantages, which is particularly not solvent-based or aqueous, and demonstrates fast, homogeneous curing, and requires only a slight layer thickness because of the great intumescence, i.e. the formation of an effective ash crust layer.

By means of the composition according to the invention, it is possible to realize improved properties of the dried film, such as no defects of the film during drying, thermal stability and bond strength without a significant effect on the curing speed. Moreover, the composition and its application are VOC free.

A further advantage lies in that it is possible to apply more material in a single step to result in higher film thicknesses and temperatures compared to other aqueous formulations in one coat without negative consequences.

For a better understanding of the invention, the following explanations of the terminology used herein are considered useful. In the sense of the invention:
- *"chemical intumescence"* means the formation of a voluminous, insulating ash layer by means of compounds coordinated with one another, which react with one another when acted on by heat;
- *"physical intumescence"* means the formation of a voluminous, insulating layer by means of expansion of a compound that releases gases, without a chemical reaction between two compounds having taken place, thereby causing the volume of the compound to increase by a multiple of the original volume;
- *"insulation-layer-forming"* that in the event of a fire, a firm micro-porous carbon foam is formed, so that the fine-pore and thick foam layer that is formed, called the ash crust, insulates a substrate against heat, depending on the composition;
- a *"carbon supplier"* is an organic compound that leaves a carbon skeleton behind due to incomplete combustion, and does not combust completely to form carbon dioxide and water (carbonization); these compounds are also called *"carbon-skeleton-forming agents";*
- an *"acid-forming agent'* is a compound that forms a non-volatile acid under the effect of heat, i.e. above about 150 °C, for example by decomposition, and thereby acts as a catalyst for carbonization; furthermore, it can contribute to lowering of the viscosity of the melt of the binder; the term *"dehydrogenation catalyst'* is used as an equivalent;
- a *"propellant'* is a compound that decomposes at elevated temperature, with the development of inert, i.e. non-combustible gases, and, if applicable, expands the plasticized binder to form a foam (intumescence); this term is used as having the same meaning as *"gas-forming agent';*
- an *"ash-crust stabilizer"* is what is called a skeleton-forming compound, which stabilizes the carbon skeleton (ash crust), which is formed from the interaction of the carbon formation from the carbon source and the gas from the propellant, or the physical intumescence. The fundamental method of effect in this regard is that the carbon layers that form, and are actually very soft, are mechanically solidified by inorganic compounds. The addition of such an ash-crust stabilizer contributes to significant stabilization of the intumescence crust in the event of a fire, because these additives increase the mechanical strength of the intumescent layer and/or prevent it from dripping off.

The present invention relates to a composition for an intumescent coating comprising:
(A) a binder system, comprising
   (a1) an aqueous polymer dispersion; and
   (a2) an alkoxy-functional organic polymer, which contain alkoxy-functional silane groups having the general formula (I), terminated and/or as side groups along the polymer chain,

      -Si(R¹)ₘ(OR²)₃₋ₘ (I),

      in which
      R¹ represents a linear or branched C₁-C₁₆ alkyl group,
      R² represents a linear or branched C₁-C₆ alkyl group, and
      m is a whole number from 0 to 2; and
(B) an intumescent composition.

### Binder system (A)

The composition according to the invention comprises a binder system. Said binder system contains two different binders, one of which is an aqueous copolymer dispersion and the other is a reactive system, which cures upon contact with water.

### aqueous polymer dispersion (a1)

According to the invention, one part of the binder system is a polymeric binder which polymeric binder is used along with water as a carrier in the form of an aqueous polymer dispersion (a1).

In one embodiment the polymer dispersion (a1) is based on a single polymer.

In another embodiment, the polymer dispersion (a1) is based on a copolymer. Thus, in said case the aqueous polymer dispersion is also called aqueous copolymer dispersion.

The term (co)polymer dispersion shall encompasses both embodiments.

By copolymer herein is meant a copolymer which is obtainable by reacting two or more monomers.

In a preferred embodiment of the aqueous (co)polymer dispersion, the monomers from which the (co)polymer is obtained, are selected from the group consisting of vinyl esters, an α-olefin, and an ester of ethylenically unsaturated carboxylic acids.

By vinyl ester herein is meant any suitable vinyl ester such as those from the group of vinyl esters having 3 to 12 carbon atoms in the carboxylic acid radical, such as vinyl propionate, vinyl laurate, vinyl esters of alpha-branched carboxylic acids having 8 to 11 carbon atoms such as VeoVa^{®}EH, VeoVa^{®}9 or VeoVa^{®}10. Also suitable are methacrylic esters or acrylic esters of unbranched or branched alcohols having 1 to 15 carbon atoms, such as methyl acrylate, methyl methacrylate, ethyl acrylate, ethyl methacrylate, propyl acrylate, propyl methacrylate, n-butyl acrylate, n-butyl methacrylate, 2-ethylhexyl acrylate, norbornyl acrylate. Also suitable are vinyl halides such as vinyl chloride.

By α-olefin herein is meant any suitable α-olefin such as ethylene, styrene, or vinyl chloride and the like

By ester of ethylenically unsaturated carboxylic acids herein is meant any suitable ester of ethylenically unsaturated carboxylic acids such as esters of acrylic acid, methacrylic acid, fumaric acid, and maleic acid; ethylenically unsaturated carboxamides and carbonitriles, preferably acrylamide and acrylonitrile; monoesters and diesters of fumaric acid and maleic acid such as the diethyl and di-isopropyl esters, and also maleic anhydride, ethylenically unsaturated sulfonic acids and/or their salts, preferably vinylsulfonic acid, 2-acrylamido-2-methyl-propanesulfonic acid. Further examples are pre-crosslinking comonomers such as polyethylenically unsaturated comonomers, as for example divinyl adipate, diallyl maleate, allyl methacrylate or triallyl cyanurate, or post-crosslinking comonomers, as for example acrylamidoglycolic acid (AGA), methylacrylamidoglycolic acid methyl ester (MAGME), N-methylolacrylamide (NMA), N-methylolmethacrylamide (NMMA), N-methylolallylcarbamate, alkyl ethers such as the isobutoxy ether or esters of N-methylolacrylamide or of N-methylolmethacrylamide and of N-methylolallylcarbamate. Also suitable are monomers with hydroxyl or carboxyl groups, such as, for example, methacrylic and acrylic hydroxyalkyl esters such as hydroxyethyl, hydroxypropyl or hydroxybutyl acrylate or methacrylate, and 1,3-dicarbonyl compounds such as acetoacetoxyethyl acrylate, acetoacetoxypropyl methacrylate, acetoacetoxyethyl methacrylate, acetoacetoxybutyl methacrylate, 2,3-di(acetoacetoxy)propyl methacrylate, and allyl acetoacetate. Preferred are acrylic monomers.

By acrylic monomer herein is meant any suitable alkyl(alk)acrylate or (alk)acrylic acid such as methyl methacrylate, ethyl methacrylate, methyl acrylate, ethyl acrylate, methacrylic acid or acrylic acid, n-butyl acrylate, iso-butyl acrylate, t-butyl acrylate, n-butyl methacrylate, iso-butyl methacrylate, t-butyl methacrylate, 2-ethylhexyl methacrylate, 2-ethylhexyl acrylate, lauryl methacrylate, lauryl acrylate, cyclohexyl acrylate, cyclohexyl methacrylate, isobornyl acrylate, isobornyl methacrylate; hydroxyl-functional acrylates such as 2-hydroxyethyl methacrylate, hydroxypropylethyl methacrylate, 2-hydroxyethyl acrylate, or hydroxypropyl acrylate; and mixtures thereof.

In a preferred embodiment of the invention the copolymer is obtainable by reacting
(i) at least one vinyl ester and at least one ester of an ethylenically unsaturated carboxylic acid, or
(ii) at least one vinyl ester and at least one α-olefin, or
(iii) at least one α-olefin and at least one ester of an ethylenically unsaturated carboxylic acid.

Preferably, the vinyl ester in (i) and (ii) is a combination of a first vinyl ester and a second vinyl ester, which second vinyl ester is different from the first vinyl ester.

In one embodiment the first vinyl ester is selected from the group consisting of vinyl acetate, vinyl propionate and vinyl laurate.

In a further embodiment the second vinyl ester is a vinyl ester of neoalkanoic acid.

Said vinyl ester of neoalkanoic acid is preferably one of formula (I) 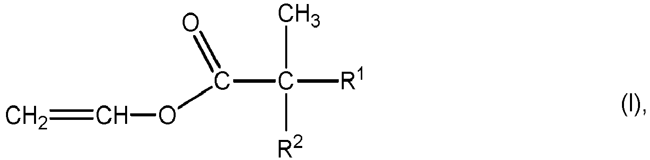 wherein R¹ and R² are alkyl groups, which together contain 6 to 8 carbon atoms.

VeoVa^{®} neoalkanoic vinyl esters are available from Hexion Specialty Chemicals of Columbus, Ohio. In VeoVa^{®}9, R¹ and R² together contain about 6 carbon atoms. In VeoVa^{®}10, R¹ and R² together contain about 7 carbon atoms. In VeoVa^{®}11, R¹ and R² together contain about 8 carbon atoms.

According to the invention the α-olefin is most preferably selected from the group consisting of ethylene, vinyl chloride, and styrene.

According to the invention, the ester of ethylenically unsaturated carboxylic acids is most preferably selected from C₁-C₁₂-alkyl (meth)acrylates.

In a preferred embodiment of the invention the copolymer is obtainable by reacting:
(i) at least one vinyl ester and at least one ester of an ethylenically unsaturated carboxylic acid, for example a vinyl acetate-VeoVa^{®}10-acrylate copolymer; or
(ii) at least one vinyl ester and at least one α-olefin, for example a vinyl acetate, ethylene and vinyl ester terpolymer; or
(iii) at least one α-olefin and at least one ester of an ethylenically unsaturated carboxylic acid, for example a styrene-acrylic copolymer.

The polymeric binder is preferably incorporated into the composition as an aqueous dispersion. Such dispersion typically comprises particles of the polymer suspended in water which coalesce on drying to form the polymeric binder.

### alkoxy-functional organic polymer (a2)

According to the invention the composition comprises, as part of the polymeric binder, an alkoxy-functional organic polymer (a2), which contain alkoxy-functional silane groups having the general formula (I), terminated and/or as side groups along the polymer chain,

-Si(R¹)ₘ(OR²)₃₋ₘ (I),

in which
R¹ represents a linear or branched C₁-C₁₆ alkyl group,
R² represents a linear or branched C₁-C₆ alkyl group, and
m is a whole number from 0 to 2.

The alkoxy-functional organic polymer, which contain alkoxy-functional silane groups having the general formula (I), terminated and/or as side group along the polymer chain is herein also referred to as silane-terminated polymer.

According to the invention, the alkoxysilane-functional polymer comprises a basic skeleton that is selected from the group consisting of an alkyl chain, polyether, polyester, polyether ester, polyamide, polyurethane, polyester urethane, polyether urethane, polyether ester urethane, polyamide urethane, polyurea, polyamine, polycarbonate, polyvinyl ester, polyacrylate, polyolefin, such as polyethylene or polypropylene, polyisobutylene, polysulfide, natural rubber, neoprene, phenolic resin, epoxy resin, melamine. In this regard, the basic skeleton can have a linear or branched structure (linear basic skeleton with side chains along the chain of the basic skeleton) and contains alkoxy-functional silane groups, preferably at least two alkoxy-functional silane groups, in a terminating position, i.e. as the end groups of a linear basic skeleton or as the end groups of the linear basic skeleton and as the end groups of the side groups. Preferably, the basic skeleton consists of polyether, polypropylene glycol or polyurethane.

The alkoxy-functional silane group has the general Formula (I)

-Si(R¹)ₘ(OR²)₃₋ₘ (I),

in which R¹ stands for a linear or branched C₁-C₁₆ alkyl radical, preferably for a methyl or ethyl radical, R² stands for a linear or branched C₁-C₆ alkyl radical, preferably for a methyl or ethyl radical, and m stands for a whole number from 0 to 2, preferably 0 or 1.

Preferably, the alkoxy-functional silane groups are bound to the basic skeleton by way of a group such as a further, different functional group (X = e.g. -S-, -OR, -NHR, -NR₂), which either itself can function as an electron donor or contains an atom that can function as an electron donor, wherein the two functional groups, i.e. the further functional group and the alkoxy-functional silane groups are connected with one another by way of a methylene bridge or a propylene bridge (-X-CH₂-Si(R¹)ₘ(OR²)₃₋ₘ or (-X-C3H6-Si(R¹)ₘ(OR²)₃₋ₘ).

Most preferably, the alkoxysilane-functional polymers are polymers in which the basic skeleton is terminated by way of a urethane group with silane groups, such as, for example dimethoxy(methyl)silylmethylcarbamate-terminated polyethers and polyurethanes, dimethoxy(methyl)silylpropylcarbamate-terminated polyethers and polyurethanes, trimethoxysilylmethylcarbamate-terminated polyethers and polyurethanes, trimethoxysilylpropylcarbamate-terminated polyethers and polyurethanes or mixtures thereof.

Examples of suitable polymers comprise silane-terminated polyethers (e.g. Geniosil^{®} STP-E 10, Geniosil^{®} STP-E 15, Geniosil^{®} STP-E 30, Geniosil^{®} STP-E 35, Geniosil^{®} XB 502, Geniosil^{®} WP 1 from Wacker Chemie AG, Polymer ST61, Polymer ST75 and Polymer ST77 from Evonik Hanse), and silane-terminated polyurethanes (Desmoseal^{®} S XP 2458, Desmoseal^{®} S XP 2636, Desmoseal^{®} S XP 2749, Desmoseal^{®} S XP 2821 from Bayer, SPUR+*1050MM, SPUR+*1015LM, SPUR+* 3100HM, SPUR+* 3200HM from Momentive).

The viscosity of these alkoxysilane-functional polymers preferably lies between 0.1 and 50,000 Pa·s, more preferably between 0.5 and 35,000 Pa·s, and most preferably between 0.5 and 30,000 Pa·s.

The viscosity was determined using a Kinexus rotation rheometer, by measuring a flow curve at +23 °C; the values indicated are the measured value at 215 s⁻¹.

As alternative polymers, preferably those in which the alkoxy-functional silane groups are not terminally installed into the skeleton of the polymer but rather distributed, in targeted manner, in side positions over the chain of the basic skeleton, can preferably be used. Important properties, such as the crosslinking density, can be controlled by way of the installed multiple crosslinking units. Here, the product line TEGOPAC^{®} from Evonik Goldschmidt GmbH can be mentioned as a suitable example, such as TEGOPAC^{®} BOND 150, TEGOPAC^{®} BOND 250 and TEGOPAC^{®} SEAL 100. In this connection, reference is made to DE 102008000360 A1, DE 102009028640 A1, DE102010038768 A1, and DE 102010038774 A1 as examples.

Usually, in these alkoxysilane-functional polymers, the polymer carries 2 to 8 alkoxysilane-functional silane groups per prepolymer molecule.

The degree of crosslinking of the binder and thereby both the strength of the resulting coating and its elastic properties can be adjusted as a function of the chain length of the basic skeleton, the alkoxy-functionality of the polymer, and the seat of the alkoxy-functional silane groups.

The total amount of the polymeric compounds, that is, the amount of the polymeric compounds resulting from the alkoxy-functional polymer and the aqueous polymer dispersion usually is 9 to 60 wt.-%, preferably 16 to 35 wt.-%, with reference to the total weight of the composition.

In this context, the amount of the polymer resulting from the alkoxy-functional polymer is 1 to 33 wt.-%, preferably 4 to 12 wt.-%, with reference to the total weight of the composition.

Also, in this context, the amount of the (co)polymer resulting from the aqueous polymer dispersion is 4 to 27 wt.-%, preferably 12 to 25 wt.-%, with reference to the total weight of the whole composition. Usually, the aqueous polymer dispersion contains 50 to 55 wt.-% of polymer. The rest is water and additives, such as stabilizers.

To avoid reaction between the water of the aqueous copolymer dispersion and the alkoxy-functional organic polymer, the aqueous copolymer dispersion and the alkoxy-functional organic polymer must be stored separately. This means that both components must be packed separately, e.g. in a two- or multi-component packaging, preferably in a two-component packaging.

In a preferred embodiment of the two-component packaging,
- the amount of the (co)polymer in the component, which contains the aqueous polymer dispersion, is 4 to 27 wt.-%, preferably 12 to 25 wt.-%, with reference to the total weight of the component containing the aqueous polymer dispersion; and
- the amount of the polymer in the component, which contains the alkoxy-functional polymer, is 10 to 100 wt.-%, preferably 20 to 50 wt.-%, with reference to the total weight of the component containing the alkoxy-functional polymer.

In said two-component packaging the weight ratio between the component containing the aqueous polymer dispersion to the component containing the alkoxy-functional polymer is from 100:1 to 2:1.

### Intumescent composition (B)

According to the invention, the composition contains an intumescent composition, wherein the composition can comprise both one individual compound or a mixture of multiple compounds.

It is practical if, as an intumescent composition, a compound is used that acts by means of the formation of an expanded insulating layer that forms under the effect of heat, composed of a material with low flammability, which protects the substrate from overheating and thereby prevents or at least delays a change in the mechanical and static properties of supporting structural parts. The formation of a voluminous insulating layer, namely an ash layer, can be formed by means of the chemical reaction of a mixture of corresponding compounds, coordinated with one another, which react with one another under the effect of heat. Such systems are known to a person skilled in the art by the term chemical intumescence and can be used according to the invention. Alternatively, the voluminous, insulating layer can be formed by means of physical intumescence. Both systems can be used alone or together, according to the invention, as a combination, in each instance.

For the formation of an intumescent layer by means of chemical intumescence, at least three components are generally required, a carbon supplier, a dehydrogenation catalyst, and a propellant (also known as gas-forming agent), which are contained in a binder in the case of coatings, for example. Under the effect of heat, the binder plasticizes, and the compounds are released is released, so that they react with one another, in the case of chemical intumescence, or can expand, in the case of physical intumescence. The acid that serves as the catalyst for carbonization of the carbon supplier is formed from the dehydrogenation catalyst, by means of thermal decomposition. At the same time, the propellant decomposes, forming inert gases that brings about expansion of the carbonized (charred) material and, if applicable, the plasticized binder, causing the formation of a voluminous, insulating foam.

In an embodiment of the invention in which the insulating layer is formed by means of chemical intumescence, the insulation-layer-forming additive comprises at least one carbon-skeleton-forming agent, if the binder cannot be used as such, at least one acid-forming agent, at least one propellant, and at least one inorganic skeleton-forming agent.

In case the binder itself can be used as a carbon-skeleton-forming agent, the intumescent composition (B) comprises at least one acid-forming agent and at least one propellant. Optionally, to increase the stability of the ash-crust, the intumescent composition can contain additionally at least one inorganic skeleton-forming agent. Even if the binder itself can serve as a carbon-skeleton-forming agent, an additional carbon-skeleton-forming agent can additionally be added to the intumescent composition.

The components of the intumescent composition are particularly selected in such a manner that they can develop synergy, wherein some of the compounds can fulfill multiple functions.

Compounds usually used in intumescent fire-protection agents and known to a person skilled in the art are possible carbon suppliers, such as compounds similar to starch, for example starch and modified starch, and/or multivalent alcohols (polyols), such as saccharides and polysaccharides and/or a thermoplastic or duroplastic polymer resin binder, such as a phenolic resin, a urea resin, a polyurethane, polyvinyl chloride, poly(meth)acrylate, polyvinyl acetate, polyvinyl alcohol, a silicone resin and/or a natural rubber. Suitable polyols are polyols from the group of sugar, pentaerythrite, dipentaerythrite, tripentaerythrite, polyvinyl acetate, polyvinyl alcohol, sorbitol, EO-PO-polyols. Preferably, pentaerythrite, dipentaerythrite or polyvinyl acetate are used.

It should be mentioned that in the event of a fire, the binder itself can also have the function of a carbon supplier.

Compounds usually used in intumescent fire-protection formulations and known to a person skilled in the art are possible dehydrogenation catalysts or acid-forming agents, such as a salt or an ester of an inorganic, non-volatile acid, selected from among sulfuric acid, phosphoric acid or boric acid. Essentially, compounds containing phosphorus are used; their palette is very large, because they extend over multiple oxidation stages of phosphorus, such as phosphines, phosphine oxides, phosphonium compounds, phosphates, elemental red phosphorus, phosphites, and phosphates. The following examples of phosphoric acid compounds can be mentioned: mono-ammonium phosphate, di-ammonium phosphate, ammonium phosphate, ammonium polyphosphate, melamine phosphate, melamine resin phosphate, potassium phosphate, polyol phosphates such as pentaerythrite phosphate, glycerin phosphate, sorbite phosphate, mannite phosphate, dulcite phosphate, neopentyl glycol phosphate, ethylene glycol phosphate, dipentaerythrite phosphate, and the like. Preferably, a polyphosphate or an ammonium polyphosphate is used as a phosphoric acid compound. In this regard, melamine resin phosphates are understood to be compounds such as the reaction products of Lamelite C (melamine/formaldehyde resin) with phosphoric acid. The following examples of sulfuric acid compounds can be mentioned: ammonium sulfate, ammonium sulfamate, nitroaniline bisulfate, 4-nitroaniline-2-sulfonic acid and 4,4-dinitrosulfanilamide and the like. Melamine borate can be mentioned as an example of a boric acid compound.

Possible propellants are the compounds usually used in fire-protection agents and known to a person skilled in the art, such as cyanuric acid or isocyanic acid and their derivatives, melamine and its derivatives. Such compounds are cyanamide, dicyanamide, dicyandiamide, guanidine and its salts, biguanide, melamine cyanurate, cyanic acid salts, cyanic acid esters and amide, hexamethoxymethyl melamine, dimelamine pyrophosphate, melamine polyphosphate, melamine phosphate. Preferably, hexamethoxymethyl melamine or melamine (cyanuric acid amide) is used.

Furthermore, components that do not restrict their method of action to a single function, such as melamine polyphosphate, which acts both as an acid-forming agent and as a propellant, are suitable. Further examples are described in GB 2 007 689 A1, EP 139 401 A1, and US 3,969,291 A1.

In an embodiment of the invention, in which the insulating layer is formed by means of physical intumescence, the insulation-layer-forming additive comprises at least one thermally expandable compound, such as a graphite intercalation compound, which compounds are also known as expandable graphite. These can also be contained in the binder, particularly homogeneously.

Known intercalation compounds of SOₓ, NOₓ, halogen and/or strong acids in graphite are possible for use as expanded graphite, for example. These are also referred to as graphite salts. Expanded graphites that release SO₂, SO₃, NO and/or NO₂ at temperatures of 120 to 350 °C, for example, causing expansion, are preferred. The expanded graphite can be present, for example, in the form of small plates having a maximal diameter in the range of 0.1 to 5 mm. Preferably, this diameter lies in the range of 0.5 to 3 mm. Expanded graphites suitable for the present invention are commercially available. In general, the expanded graphite particles are uniformly distributed in the fire-protection elements according to the invention. The concentration of expanded graphite particles can, however, also be varied in point-like, pattern-like, planar and/or sandwich-like manner. In this regard, reference is made to EP 1489136 A1, the content of which is hereby incorporated into this application.

In a further embodiment of the invention, the insulating layer is formed both by means of chemical and by means of physical intumescence, so that the intumescent composition comprises not only a carbon supplier (optional as mentioned above), a dehydrogenation catalyst, and a propellant, but also thermally expandable compounds.

Because the ash crust formed in the event of a fire is generally too unstable, and, depending on its density and structure, can be blown away by air streams, for example, which has a negative effect on the insulating effect of the coating, preferably at least one ash-crust stabilizer is added to the components just listed.

The compounds usually used in fire-protection formulations and known to a person skilled in the art are usually considered as ash-crust stabilizers or skeleton-forming agents, for example expanded graphite and particulate metals, such as aluminum, magnesium, iron, and zinc. The particulate metal can be present in the form of a powder, of lamellae, scales, fibers, threads and/or whiskers, wherein the particulate metal in the form of powder, lamellae or scales possesses a particle size of ≤50 µm, preferably of 0.5 to 10 µm. In the case of use of the particulate metal in the form of fibers, threads and/or whiskers, a thickness of 0.5 to 10 µm and a length of 10 to 50 µm are preferred. Alternatively or additionally, an oxide or a compound of a metal from the group comprising aluminum, magnesium, iron or zinc can be used as an ash-crust stabilizer, particularly iron oxide, preferably iron trioxide, titanium dioxide, a borate, such as zinc borate and/or a glass frit composed of glass types having a low melting point, with a melting temperature of preferably at or above 400 °C, phosphate or sulfate glass types, melamine poly-zinc-sulfates, ferroglass types or calcium boron silicates. The addition of such an ash-crust stabilizer contributes to significant stabilization of the ash crust in the event of a fire, since these additives increase the mechanical strength of the intumescent layer and/or prevent it from dripping off. Examples of such additives are also found in US 4,442,157 A, US 3,562,197 A, GB 755 551 A, as well as EP 138 546 A1.

In addition, ash-crust stabilizers such as melamine phosphate or melamine borate can be contained.

The intumescent composition can be contained in the composition in an amount of 30 to 99 wt.-%, with reference to the total composition, wherein the amount essentially depends on the application form of the composition (spraying, brushing, and the like). To bring about the highest possible intumescence rate, the proportion of the intumescent composition in the total formulation is set to be as high as possible. Preferably, its proportion in the total formulation amounts to 35 to 85 wt.-%, and particularly preferably 40 to 85 wt.-%.

### Further compounds

In an alternative embodiment, the composition contains in addition to the water of the aqueous polymer dispersion a further crosslinking agent for the alkoxy-functional organic polymer. In this way, more homogeneous and faster curing of the binder can be achieved. Curing of the composition therefore becomes independent of the absolute humidity in the air, and the composition cures reliably and quickly, even under extremely dry conditions.

This crosslinking agent can be any compound capable of reacting with the alkoxy-groups of the alkoxy-functional polymer or additional water, whereas additional water as crosslinking agent is preferred.

To avoid reaction between the water of the aqueous copolymer dispersion and the alkoxy-functional organic polymer, the aqueous copolymer dispersion together with the optionally contained additional water and the alkoxy-functional organic polymer must be stored separately. This means that both components must be packed separately, e.g. in a two- or multi-component packaging.

In this case, the amount of the water in the aqueous polymer dispersion containing component is 30 to 200 wt.-%, preferably 60 to 80 wt.-%, with reference to the aqueous polymer dispersion. The amount of the water in the component containing the aqueous copolymer dispersion is 5 to 25 wt.-%, preferably about 10 wt.-%, with reference the component containing the aqueous copolymer dispersion.

The amount of the additional water, not including the water of the aqueous polymer dispersion, is 0 to about 20 wt.-%, preferably, 1 to 15 wt.-%, more preferably 8 to 12 wt.-%, with reference to the total weight of the component containing the aqueous polymer dispersion.

The total amount of water in the component containing the aqueous polymer dispersion depends on the amount of the dispersion and the amount of the water in the dispersion. Together with the amount of water, which is introduce by the aqueous polymer dispersion, the total amount of water in the WB component is preferably 20 to 45 wt.-%, with reference to the total weight of the component containing the aqueous polymer dispersion.

The weight ratio of the polymer resulting from the aqueous polymer dispersion to the polymer resulting from the alkoxy-functional polymer is in the range of 0.08:1 to 267:1, preferably in the range of 1.5:1 to 4:1.

Aside from the actual crosslinking agent, particularly water, the composition can contain further crosslinking agents, other than water. These are referred to as co-crosslinking agents herein. Different properties, such as adhesion to the substrate, better wetting of the additives, and curing speed of the composition can be optimized in targeted manner and customized by means of the co-crosslinking agent.

Suitable co-crosslinking agents are selected from the group of basic silane-functional compounds, for example amino silanes, such as aminopropyltrimethoxysilane, aminopropyltriethoxysilane, aminopropylmethyldimethoxysilane, aminopropylmethyldiethoxysilane, *N*-(2-aminoethyl)-aminopropyltrimethoxysilane, N-(2-aminoethyl)aminopropyltrimethoxysilane, *N*-(2-aminoethyl)-aminopropyltriethoxysilane, *N*-(2-aminoethyl)-aminopropyl-methyldimethoxysilane, *N-*cyclohexylaminomethyltriethoxysilane, *N*-cyclohexyl-aminomethyl-methyldiethoxysilane, *N*-cyclohexylaminomethyl-trimethoxysilane, *N-*cyclohexylaminomethy-1-methyldimethoxysilane.

These co-crosslinking agents are preferably contained in an amount of 0 to 5.0 wt.-%, with reference to the total composition, more preferably of 0.1 to 3.0 wt.-%, and most preferably of 0.5 to 2.0 wt.-%. The inventor found out that below 1% there is no significant restriction on pot life, but an amount of crosslinker of more than 1% leads to a significant increase in curing speed.

For the alkoxysilane-functional polymer and the crosslinking agent not to be brought prematurely into contact with one another and curing to be initiated prematurely, it is practical if these are separated from one another, to inhibit a reaction.

### Catalyst

In a preferred embodiment, the composition contains at least one catalyst for the curing of the silane-terminated polymer. All compounds that are suitable for catalyzing the formation of the Si-O-Si-bonds between the silane groups of the polymers can be used as catalysts. As examples, metal compounds, such as titanium compounds, tin compounds can be mentioned. Alternatively, acidic or basic catalysts can be mentioned.

Among the titanium compounds, titanate esters are preferred, such as tetrabutyltitanate, tetrapropyltitanate, tetraisopropyltitanate, tetraacetylacetonate-titanate.

Among the metal compounds as catalysts, organo-aluminum compounds or reaction products of bismuth salts or chelate compounds, such as zirconium tetracetylacetonate, can be mentioned.

Among the tin compounds, dibutyl tin dilaurate, dibutyl tin maleate, dibutyl tin diacetate, dibutyl tin dioctanoate, dibutyl tin acetylacetonate, dibutyl tin oxide, or corresponding compounds of dioctyl tin, tin naphthenate, dimethyl tin dineododecanoate, reaction products of dibutyl tin oxide, and phthalic acid esters are preferred.

Since some of these catalysts are problematical regarding their toxicity, catalysts that do not contain metals, such as acidic or basic catalysts, are preferred.

Phosphoric acid or phosphoric acid esters, toluene sulfonic acids, and mineral acids can be mentioned as examples of acidic catalysts.

Solutions of simple bases such as NaOH, KOH, K₂CO₃, ammonia, Na₂CO₃, aliphatic alcoholates or K-phenolate can be mentioned as examples of basic catalysts.

Particularly preferably, the catalyst is selected from among the group of organic amines, such as triethylamine, tributylamine, trioctylamine, monoethanolamine, diethanolamine, triethanolamine, triisopropanolamine, tetramethylene diamine, Quadrol, diethylene triamine, dimethylaniline, Proton Sponge, *N*,*N*'-bis[2-(dimethylamino)ethyl]-*N*,*N*'-dimethylethylene diamine, *N*,*N*-dimethylcyclohexylamine, *N*-dimethylphenlyamine, 2-methylpentamethylene diamine, 2-methylpentamethylene diamine, 1,1,3,3-tetramethylguanidine, 1,3-diphenylguanidine, benzamidine, *N*-ethylmorpholine, 2,4,6-tris(dimethylaminomethyl)phenol (TDMAMP); 1,8-diazabicyclo[5.4.0]undec-7-ene (DBU), and 1,5-diazabicyclo(4.3.0)non-5-ene (DBN); n-pentylamine, n-hexylamine, di-n-propylamine, and ethylene diamine; DABCO, DMAP, PMDETA, imidazol and 1-methylimidazol or salts of amines and carboxylic acids, and polyetheramines, such as polyethermonoamines, polyetherdiamines or polyethertriamines, such as, for example, the Jeffamines of Huntsman and ether amines, such as, for example, the Jeffkats of Huntsman. In this regard, reference is made to the patent applications WO 2011/157562 A1 and WO 2013/003053 A1.

The type and the amount of the catalyst are selected as a function of the selected alkoxysilane-functional polymer and the desired reactivity.

### Additives

In a further embodiment, the composition according to the invention furthermore contains at least one further constituent, selected from among plasticizers, water catchers, organic and/or inorganic admixtures and/or further additives.

The plasticizer has the task of plasticizing the cured polymer network. Furthermore, the plasticizer has the task of introducing an additional liquid component, so that the fillers are completely wetted, and the viscosity is adjusted in such a manner that the coating becomes processable using a spray device. The plasticizer can be contained in the formulation in such an amount that it can sufficiently fulfill the functions just described.

Preferably the plasticizer is selected from among derivatives of benzoic acid, phthalic acid, e.g. phthalates, such as dibutylphthalate, dioctylphthalate, dicyclohexylphthalate, diisooctylphthalate, diisodecylphalate, dibenzylphthalate or butylbenzylphthalate, trimellitic acid, pyromellitic acid, alkane diacid, such as butyric acid, glutaric acid, pimelic acid, adipic acid, suberic acid, azelaic acid, sebacic acid, fumaric acid, maleic acid, itaconic acid, caprylic acid and citric acid, ricinoleic acid, phosphates, alkylphosphate esters, and derivatives of polyesters and polyethers, glycol ethers and glycol esters, epoxy-enhanced oils, sulfonamides, terpenes, oils and derivatives thereof, such as soybean oil, C₁₀-C₂₁ alkylsulfonic acid esters of phenol, alkanes, cycloalkanes, and alkyl esters. More preferably, the plasticizer is selected from an ester derivative of terephthalic acid, a triol ester of caprylic acid, a glycol diester, diol esters of aliphatic dicarboxylic acids, ester derivative of citric acid, secondary alkylsulfonic acid ester, ester derivatives of glycerin with epoxy groups, and ester derivatives of phosphates. Most preferably, the plasticizer is dioctyladipate, bis(2-ethylhexyl)terephthalate, trihydroxymethylpropylcaprylate, triethylene glycol-bis(2-ethylhexanoate), 1,2-cyclohexane dicarboxylic acid diisononyl ester, a mixture of 75 to 85 % secondary alkylsulfonic acid esters, 15 to 25 % secondary alkane disulfonic acid diphenylesters, as well as 2 to 3 % non-sulfonated alkanes, triethylcitrate, epoxy-enhanced soybean oil, tri-2-ethylhexylphosphate or a mixture of n-octylsuccinate and n-decylsuccinate.

Examples of this are Plastomoll^{®} DOA, Eastman^{®} (TM) DOTP Plasticizer (Eastman), Esterex NP 343 (Exxon Mobil), Solusolv^{®} 2075 (Butvar), Hexamoll^{®} DINCH (BASF), Mesamoll^{®} II (Lanxess), triethylcitrate (Sigma Aldrich), PARAPLEX^{®} G-60 (Hallstar), Disflammol^{®} TOF (Lanxess), and Uniplex LXS TP ODS (Lanxess).

In the composition, the plasticizer can preferably be contained in an amount of 0.1 to 40 wt.-%, more preferably 1 to 35 wt.-%, and even most preferably 5 to 25 wt.-%, with reference to the total composition.

To prevent a premature reaction with residual moisture of the fillers used or of the humidity in the air, water scavengers are usually added to the composition. Preferably, the water catcher is an organo-functional alkoxysilane or an oligomer organo-functional alkoxysilane, more preferably a vinyl-functional silane, an oligomer vinyl-functional silane, a vinyl-/alkyl-functional silane, an oligomer amino-/alkyl-functional silane, an acetoxy-/alkyl-functional silane, an amino-functional silane, an oligomer amino-functional silane, a carbamatosilane or a methacryloxy-functional silane. Most preferably, the water catcher is di-*tert*-butoxydiacetoxysilane, bis(3-triethoxysilylpropyl)amine, bis(3-trimethoxypropyl)amine, 3-aminopropylmethyldiethoxysilane, 3-aminopropyltriethoxysilane, vinyl triethoxysilane, vinyl trimethoxysilane, vinyl tris(2-methoxyethoxy)silane, *N*-cyclohexylaminomethyl triethoxysilane, vinyldimethoxymethyl silane, vinyltriacetoxysilane, 3-methacryloxypropyl trimethoxysilane, methacryloxymethyl-methyldimethoxysilane, methacryloxymethyl trimethoxysilane, 3-methacryloxypropyl triacetoxysilane, *N*-methyl[3-(trimethoxysilyl)propyl]carbamate, *N-*trimethoxysilylmethyl-*O*-methylcarbamate, *N*-dimethoxy(methyl)silyl-methyl-*O-*methylcarbamate or combinations thereof.

Examples of this are Dynasylan^{®} 1146, Dynasylan^{®} 6490, Dynasylan^{®} 6498, Dynasylan^{®} BDAC, Dynasylan^{®} 1122, Dynasylan^{®} 1124, Dynasylan^{®} 1133, Dynasylan^{®} 1204, Dynasylan^{®} 1505, Dynasylan^{®} 1506, Dynasylan^{®} AMEO, Dynasylan^{®} AMEO-T, Dynasylan^{®} VTEO, Dynasylan^{®} VTMO, Dynasylan^{®} VTMOEO, Dynasylan^{®} 6598 (Evonik), Geniosil^{®} XL 926, Geniosil^{®} XL 10, Geniosil^{®} XL 12, Geniosil^{®} GF 56, Geniosil^{®} GF 62, Geniosil^{®} GF 31, Geniosil^{®} XL 32, Geniosil^{®} XL 33, Geniosil^{®} GF 39, Geniosil^{®} GF 60, Geniosil^{®} XL 63, and Geniosil^{®} XL 65 (Wacker). These water catchers are preferably contained in an amount of 0 to 5 wt.-%, with reference to the total composition, more preferably of 0.5 to 4 wt.-%, and most preferably of 0.7 to 3 wt.-%.

Optionally, one or more reactive flame inhibitors can be added to the composition according to the invention as further additives. Such compounds are built into the binder. Examples in the sense of the invention are reactive organophosphorus compounds, such as 9,10-dihydro-9-oxa-10-phosphaphene-anthrene-10-oxide (DOPO) and its derivatives, such as, for example, DOPO-HQ, DOPO-NQ, and adducts.

Additional additives, such as thickeners and/or rheology additives, as well as fillers, can be added to the composition. Preferably, polyhydroxycarboxylic acid amides, urea derivatives, salts of unsaturated carboxylic acid esters, alkylammonium salts of acidic phosphoric acid derivatives, ketoximes, amine salts of p-toluene sulfonic acid, amine salts of sulfonic acid derivatives, as well as aqueous or organic solutions or mixtures of the compounds are used as rheology additives, such as anti-settling agents, anti-runoff agents, and thixotropic agents. In addition, rheology additives based on pyrogenic or precipitated silicic acids or based on silanated pyrogenic or precipitated silicic acids can be used. Preferably, the rheology additives are pyrogenic silicic acids, modified and non-modified sheet silicates, precipitation silicic acids, cellulose ethers, polysaccharides, PU and acrylate thickeners, urea derivatives, castor oil derivatives, polyamides and fatty acid amides and polyolefins, if they are present in solid form, powdered celluloses and/or suspension agents such as xanthan gum, for example.

Aside from the additives already described, the composition can contain usual aids such as wetting agents, for example based on polyacrylates and/or polyphosphates, defoamers, such as silicone defoamers, pigments, fungicides, or diverse fillers, such as vermiculite, inorganic fibers, quarts sand, micro-glass beads, mica, silicon dioxide, mineral wool, and the like, if necessary.

The composition according to the invention can be packaged as a single-component or multi-component system. If the composition contains water as a crosslinking agent or a crosslinking agent that contains water, these must be stored away from the alkoxysilane-functional polymer, to inhibit a reaction. Accordingly, such a system is packaged as a two-component or multi-component system.

The further constituents of the composition are divided up in accordance with their compatibility with one another and with the compounds contained in the composition and can be contained in one of the two components or in both components. It is practical if the water catcher and the co-crosslinking agent, if present, are packaged separately from the component that contains the crosslinking agent, particularly water.

Furthermore, the division of the further constituents, particularly of the solid constituents, can depend on the amounts in which these are supposed to be contained in the composition. By means of a corresponding division, a higher proportion, with reference to the total composition, can occur in some cases.

It is also possible that a component contains merely the crosslinking agent, particularly the water. Alternatively, the crosslinking agent, particularly the water, can be contained in a component of the two-component system together with other constituents, such as plasticizers, additives and/or fillers.

In this regard, the intumescent composition can be contained as a total mixture or, divided up into individual components, in one component or multiple components. The division of the fire-protection additive takes place as a function of the compatibility of the compounds contained in the composition, so that neither a reaction of the compounds contained in the composition with one another or reciprocal disruption, nor a reaction of these compounds with the compounds of the other constituents can take place. This is dependent on the compounds used.

It is preferred if the intumescent composition contains a carbon supplier, a propellant, and a dehydrogenation catalyst, the carbon supplier, the propellant, and the dehydrogenation catalyst are separated from the alkoxysilane-functional polymer and the crosslinking agent to inhibit a reaction. But it is also possible that only the carbon supplier is separated from the alkoxysilane-functional polymer and the crosslinking agent, this means that the propellant, the dehydrogenation catalyst and the alkoxysilane-functional polymer can be contained in one component. In this way, it is ensured that the highest possible proportion of fillers can be achieved. This leads to high intumescence, even at low layer thicknesses of the composition.

If the composition furthermore contains an ash-crust stabilizer, the latter can be contained in one of the two components of the two-component system. Alternatively, the ash-crust stabilizer can also be divided up among the two components. Accordingly, the ash-crust stabilizer is divided up among the first component and the second component in such a manner that the first component or the second component contains at least a part of the ash-crust stabilizer, and the second component or the first component contains a further part of the ash-crust stabilizer, if applicable.

The composition is applied to the substrate, particularly metallic substrate, as a paste, using a brush, a roller or by means of spraying. Preferably, the composition is applied by means of an airless spraying method.

The composition according to the invention is characterized, compared with the solvent-based and aqueous systems and the system according to WO 2010/131037 A1, by relatively rapid curing by means of hydrolysis and a subsequent polycondensation reaction, thereby making physical drying unnecessary. Furthermore, the curing properties and the properties of the dried (cured) composition can be controlled by way of the water content in the composition. This is particularly very important if the coated structural parts must quickly be subjected to stress or processed further, whether by means of coating with a cover layer or movement or transportation of the parts. Also, the coating is therefore clearly less susceptible to external influences at the construction site, such as, for example, impact of (rain) water or dust and dirt, which can lead, in solvent-based or aqueous systems, to water-soluble constituents, such as ammonium polyphosphate, being washed out, or, in the event of dust being absorbed, to reduced intumescence. Because of the low plasticization point of the binder and the high solids proportion, the expansion rate under heat effect is high, even at a low layer thickness.

For this reason, the two-component or multi-component composition according to the invention is suitable as a coating, particularly a fire-protection coating, preferably a sprayable coating for substrates on a metallic and non-metallic basis. The substrates are not restricted and comprise structural parts, particularly steel structural parts and wooden structural parts, but also individual cables, cable bundles, cable runs, and cable ducts or other lines.

The composition according to the invention is used, above all, in the construction sector, as a coating, particularly a fire-protection coating for steel construction elements, but also for construction elements composed of other materials, such as concrete or wood, and as a fire-protection coating for individual cables, cable bundles, cable runs, and cable ducts or other lines.

A further object of the invention is therefore the use of the composition according to the invention as a coating, particularly as a coating for construction elements or structural elements composed of steel, concrete, wood, and other materials, such as plastics, particularly as a fire-protection coating.

The present invention also relates to objects that are obtained when the composition according to the invention has cured. The objects have excellent insulation-layer-forming properties.

Due to presence of both the aqueous polymer dispersion (a1) and the alkoxy-functional organic polymer (a2) the solids content is higher than in a standard aqueous formulation, up to 80 vol.-%, which in general have at most 70 vol.-% solids content) but the Pigment Volume Concentration (PVC) is lower than in a standard aqueous formulation.

Another advantage of the binder composition according to the invention is that a formulation can be provided that after application to substrates has a higher bond strength compared to standard coatings based on either alkoxy-functional organic polymers or aqueous vinyl acetate (co)polymer dispersions, and shows no defects of the film during curing and that an even curing or drying is ensured even at 50°C.

Also, in view of the environmental impact, the formulation according to the invention is based on a water cleaning technology, and thus no volatile organic compounds (VOCs) are involved during application of the formulation.

Compared to standard aqueous formulations, the thixotropy (hold-up) of the formulations containing a binder system, which binder system comprises an alkoxy-functional polymer and an aqueous polymer dispersion according to the invention, is better. Not bound by any theory, it seems that the alkoxy-functional polymer has also the function of a thixotropic agent providing a completely different rheological behaviour (higher hold-up, higher viscosity on recovery) than standard aqueous formulations.

The following examples serve for a further explanation of the invention.

### EXEMPLARY EMBODIMENTS

### Compounds used in the examples:

| **Compound** | **Trade Name** | **Supplier** |
|---|---|---|
| Dimethoxy(methyl)silylmethylcarbamate-terminated polyether (α-silane) (abbreviated as MS-Copolymer 1) | GENIOSIL^{®} STP-E10 | Wacker Chemie AG |
| Dimethoxy(methyl)silylmethylcarbamate-terminated polyether (γ-silane) (abbreviated as MS-Copolymer 2) | Kaneka SAX530 | Kaneka Corporation |
| Aliphatic silane-terminated polyurethane (γ-silane) (abbreviated as MS-Copolymer 3) | Desmoseal^{®} S XP 2749 | Covestro AG |
| 3-Aminopropyltrimethoxysilane (abbreviated as MS-Crosslinker 1) | Dynasylan^{®} AMMO | Evonik Industries AG |
| 3-Aminopropyltriethoxysilane (abbreviated as MS-Crosslinker 2) | Dynaslan^{®} AMEO | Evonik Industries AG |
| 1,2-Cyclohexane dicarboxylic acid diisononyl ester | Hexamoll^{®} DINCH | BASF SE |
| Vinyl acetate/VeoVa 10/acrylate copolymer dispersion (abbreviated as Copolymer Dispersion) | Emultex FR797 | Synthomer plc |
| Hydroxyethylcellulose | Natrosol^{™} 250HHR | Ashland Global Specialty Chemicals Inc |
| Antifoaming agent | Dapro^{®} DF701 0 | Elementis plc |
| Wetting agent | BYK-W 9010 | BYK |
| Ammonium salt of a polymeric carboxylic acid | NUOSPERSE^{®} FX504 | Elementis plc. |
| 2,2,4-Trimethyl-1,3-pentandiolmonoisobutyrate | Texanol^{®} | Eastman Chemical Company |
| Tri-isobutylphosphate | Tri isobutylphosphate | Lanxess AG |
| Fumed silica | CAB-O-SIL^{®} TS-720 | Cabot Corporation |
| Mineral fibers | Roxul^{®} 1000 Rockforce MS675 | ROCKWOOL B.V. |
| Titanium dioxide | KRONOS^{®} 2056 | Kronos Incorporated |
| Melamine | Melafine^{®} | OCI N.V. |
| Pentaerythritol | Charmor^{™} PM40 | Perstorp AB |
| Ammonium polyphosphate | Exolit^{®} AP 422 | Clariant AG |
| China Clay | Polwhite^{™} E | Imerys S.A. |
| Powdered rheology additive based on organophilic phyllosilicates | Garamite-1958 | BYK |

### Comparative Example 1 (MS-1)

Comparative Example 1 is based on example 2 of WO 2010/131037 A1, however, without additives and plasticizer to better show the inventive effect. The formulation is based on an alkoxysilane-based polymer as the only polymer. The weight lost by the omission of plasticizers and additives is compensated by the silane-terminated prepolymer/crosslinker blend so that the end film has the same filling content. The formulation of Comparative Example 1 is shown in Table 1.

### Comparative Example 2 (WB-1)

Based on Comparative Example 1 an aqueous formulation with a vinyl acetate / VeoVa^{®} 10 / acrylate copolymer dispersion was prepared. The formulation is based on the copolymer dispersion as the only source of polymer. The ratios between the fillers were the same as in comparative example 1. The formulation of Comparative Example 2 is also shown in Table 1.

**Table 1: Formulation of Comparative Example 1 (MS-1) and 2 (WB-1)**

| | **Comparative Example 1** | **Comparative Example 2** |
|---|---|---|
| **Compound** | **wt.-%** | **wt.-%** |
| MS-Copolymer 1 | 20.18 | **-** |
| MS-Crosslinker 1 | 0.95 | **-** |
| Xylene | 16.59 | **-** |
| Powdered rheology additive based on organophilic phyllosilicates | 1.67 | - |
| Copolymer Dispersion | - | 34 |
| Water | - | 6 |
| Hydroxyethylcellulose | - | 0.3 |
| Antifoaming agent | - | 0.6 |
| Ammonium salt of a polymeric carboxylic acid | - | 0.5 |
| 2,2,4-Trimethyl-1,3-pentandiolmonoisobutyrate | - | 0.3 |
| Fumed silica | **-** | **-** |
| Mineral fibers | 0.92 | 0.88 |
| Titanium dioxide | 10.58 | 10.15 |
| Melamine | 9.31 | 8.92 |
| Pentaerythritol | 9.31 | 8.92 |
| Ammonium polyphosphate | 28.37 | 27.2 |
| China Clay | 2.12 | 2.03 |

### Examples

To show the influence of alkoxysilane-functional prepolymers added to an aqueous formulation the formulation of Comparative Example 2 (WB-1) was selected as the base formulation. Thereto different amounts (from 5% up to 20% based on the total weight of the formulation of comparative example 2) as shown in Table 2 of MS-Copolymer 1 and MS-Crosslinker 1 were added to the formulation of Comparative Example 2.

The resulting compositions were applied to 90° bended aluminium panels to obtain a dry film thickness (DFT) of up to 7mm at the highest point on the corner and force film defects due to drying tension during coalescence. The panel was let to dry at 50°C to further increase the coalescence tension. The cured film was visually assessed. The result of the assessment is also shown in table 2. There was a strong tendency to reduce film defects when the amount of prepolymer and crosslinker was increased.

**Table 2: MS-Copolymer 1 and MS Crosslinker 1 additions results on film formation aspect and curing**

| **Example** | **MS-Copolymer 1 [wt.-%]** | **MS-Crosslinker 1 [wt.-%]** | **Corner Aspect 24h@50°C** | **Curing** |
|---|---|---|---|---|
| 1 | 0 | 0 | Wrinkles | |
| 2 | 5 | 0 | | |
| 3 | 5 | 0.5 | | |
| 4 | 10 | 0 | Low wrinkling but cracks | No effect within 6h besides skin formation |
| 5 | 10 | 0.5 | Low wrinkling | |
| 6 | 12 | 0.5 | Low wrinkling | |
| 7 | 14 | 0.5 | Slight waves | |
| 8 | 16 | 0 | Low wrinkling | |
| 9 | 16 | 0.5 | Slight waves | |
| 10 | 16 | 1 | Smooth | Increase in viscosity after 30 minutes |
| 11 | 16 | 2 | | In 2 minutes increase in viscosity |
| 12 | 18 | 0.5 | | No effect within 6h besides skin formation |
| 13 | 20 | 0 | | |
| 14 | 20 | 0.5 | | |

Neither wrinkling nor cracking was observed when a certain level of MS or crosslinker is used. There seems to be a synergy between MS and vinyl acetate because both technologies when alone tend to crack or wrinkle. An amount of crosslinker of more than 1 wt.-% in the aqueous formulation improves aspect but accelerates the curing too much.

The examples show that higher levels of alkoxysilane-functional prepolymer than 14 wt.-% in the formulation result in a smoother coating when cured at 50°C.

Preferably, the amount of alkoxysilane-functional prepolymer (MS-Copolymer) is at least 16 wt.-% and the amount of MS-crosslinker is 0.5 wt.-%, with reference to the total composition, to minimize the dilution of intumescent fillers

The application of panels for bond strength and visual assessment was done on flat surface carbon steel panels grit blasted and primed with a compatible epoxy primer. The intumescent experimental coatings were applied at 1mm DFT and let to dry at 50°C during 24h before gluing the dollies for bond strength evaluation.

To show that different alkoxysilane-functional polymers (MS-Copolymers) and different MS-Crosslinkers can be used with the aqueous formulation the formulation of Comparative Example 2 (WB-1) was selected as the base formulation. Thereto different amounts (from 5 wt.-% up to 20 wt.-% based on the total weight of the formulation of comparative example 2) as shown in Table 3 of different MS-Copolymers and different MS-Crosslinkers were added to the formulation of Comparative Example 2. Additionally, the pull off bond strength (abbreviated as bond strength) of the coating was measured according to ISO4624, to assess the effect of different MS-Copolymers and MS-Crosslinkers.

**Table 3: MS-Copolymer and MS-Crosslinker alternatives results on bond strength and film formation aspect**

| **Example** | **MS-Copolymer** | **Amount MS Copolymer [wt.%]** | **MS-Crosslinker** | **Amount MS Crosslinker [wt.-%]** | **Bond strength [Mpa]** | **Panel visual assessment @50°C** |
|---|---|---|---|---|---|---|
| 15 | 1 | 5 | 2 | 0.5 | 5.86 | Wrinkles |
| 16 | 1 | 10 | 2 | 0.5 | 4.44 | Wrinkles |
| 17 | 1 | 14 | 2 | 0.5 | 4.59 | Sliqht waves |
| 18 | 1 | 16 | - | 0 | 4.23 | Sliqht waves |
| 19 | 1 | 16 | 2 | 0.5 | 4.84 | Smooth |
| 20 | 1 | 16 | 2 | 1 | 4.68 | Smooth |
| 21 | 3 | 16 | 2 | 0.5 | 4.35 | Smooth |
| 22 | 2 | 16 | 2 | 0.5 | 3.23 | Smooth |
| 23 | 1 | 18 | | 0.5 | 4.19 | Smooth |
| 24 | 1 | 20 | 2 | 0.5 | 3.70 | Smooth |
| Comparative Example 2 | - | - | - | - | 3.4 | Wrinkles |

The results showed that alternative MS-Copolymers were impacting positively the aspect of the aqueous film at 50°C in the same concentrations found in Table 2. A synergistic effect was observed when an MS-Copolymer was added to the formulation of Comparative Example 2 as all MS blended experiments reached similar or higher bond strength values.

The addition of MS-Crosslinkers shown also a positive effect on the bond strength.

### Example 25 (WBMS-1)

A formulation containing a binder system comprising an aqueous formulation with a vinyl acetate / VeoVa 10 / acrylate copolymer dispersion and MS-Copolymer 1 was prepared. The formulation of Example 25 is shown in Table 4.

**Table 4: Formulation of Example 25 (mixing ration by wt. A:B = 6:1)**

| **Component A** | |
|---|---|
| Comparative Example 2 | |

| **Component B** | |
|---|---|
| **Compound** | **wt.-%** |
| MS-Copolymer 1 | 97 |
| MS-Crosslinker 1 | 3 |

### Example 26 (WBMS-2)

A formulation containing a binder system comprising an aqueous formulation with a vinyl acetate / VeoVa 10 / acrylate copolymer dispersion and MS-Copolymer 2 was prepared. The formulation of Example 26 is shown in Table 5.

**Table 5: Example 26 (MSWB-2 w/ WB-2 as comp A); mixing ration by wt. A:B = 9:1**

| **Component A** | |
|---|---|
| **Compounds** | **wt.-%** |
| Copolymer Dispersion | 32.9 |
| Water | 10.1 |
| Hydroxyethylcellulose | 0.6 |
| Antifoaming agent | 0.6 |
| Ammonium salt of a polymeric carboxylic acid | 0.7 |
| Titanium dioxide | 7.8 |
| Melamine | 7.3 |
| Pentaerythritol | 7.3 |
| Ammonium polyphosphate | 29.3 |
| Mineral fibers | 0.8 |
| China Clay | 2 |
| Fumed silica | 0.6 |
| | |

| **Component B** | |
|---|---|
| **Compounds** | **wt.-%** |
| MS Copolymer 4 | 26.2 |
| Tri-isobutylphosphate | 1.4 |
| 1,2-Cyclohexane dicarboxylic acid diisononyl ester | 10.1 |
| Fumed silica | 0.7 |
| Mineral fibres | 0.9 |
| Melamine | 7.4 |
| Titanium dioxide | 11.5 |
| China Clay | 2.3 |
| Ammonium polyphosphate | 33.1 |
| Xylene | 5.2 |
| Wetting agent | 1.2 |

**Table 6: Results of the investigation of the properties of the applied films of Comparative Examples 1, 2 and Examples 25 and 26**

| **Example** | **SWR¹) [wt.-%]** | **SVR ²) [vol.-%]** | **PVC³) [vol.-%]** | **Viscosity (cP)** | **Corner application @50°C** | **Sag resistance** | **Pot life (h)** | **Shore D (24h-1mm DFT)** | **Aspect Drying @50°C 20-30%RH and 1mm DFT(h)** | **Pull off adhesion @1mm DFT (Mpa)** |
|---|---|---|---|---|---|---|---|---|---|---|
| Comparative Example 1 | 83 | 76 | 64 | 17,800 | Hairline cracks | >8mm | 1 | 20 | Smooth | 1.75 |
| Comparative Example 2 | 78 | 70 | 78 | 29,400 | Wrinkles | >2mm | Unlimit ed | 65 | Small wrinkling | 3.4 |
| Example 25 | 82 | 75 | 67 | 22,400 | No deffect | >8mm | >5 | 45 | Smooth | 4,6 |
| Example 26 | 77 | 69 | 64 | 19,200 | Smooth | 4mm | >5 | 49 | Smooth | 3,69 |

| | | | | | | | | | | |
|---|---|---|---|---|---|---|---|---|---|---|
| ¹⁾ Solid weight ratio ²⁾ Solid volume ratio ³⁾ Pigment volume concentration | | | | | | | | | | |

SWR refers to Solid weight ratio percentage. It is calculated as non-volatile compounds by mass divided by total mass of the formulation.

SVR refers to solid volume ratio percentage. It is calculated as the non-volatile compounds by volume divided by the total volume of the formulation.

PVC refers to pigment volume concentration calculated as volume of pigments divided by volume of solids in the formulation.

Viscosity was measured using a Brookfield RVT viscometer at +23°C, 50rpm and spindle 7 taking the measurement after 60 seconds measuring.

Corner application is done on 90° bended aluminium panels using a typical laboratory spatula to spread the coating and leaving the paint drying in a climatic chamber at 50°C.

Sag resistance test was done using draw down applicators at different wet film thickness clearances ranging from 0.5mm to 8mm.

Pot life is measured as the time to double the original viscosity which means since the product was opened and ready for use until is not sprayable anymore.

The flat surface aspect was determined applying a coat of 1.3mm WFT (1mm DFT) over a primed steel panel and leaving it drying over a 24h period at 50°C.

Pull off adhesion tests were carried out following the ISO4624

The results in Table 6 show that the sag resistance and surface drying speed of Example 25 and 26 were very close to Comparative Example 1. But after the panels were exposed to water after 1h of drying at 50°C, the panels coated with the formulations of Examples 25 and 26 showed that no paint was washed off.

Comparative example 1 was also showing no paint being washed off. Only Comparative example 2 would show the non-water resistance after 1h at 50°C.

**Table 7: results of panel fire testing on 1.3mm DFT panels submitted to an ISO834 fire curve**

| Example | Comparative Example 2 | Example 26 |
|---|---|---|
| Time to reach 538°C (min) | 58.8 | 63.6 |
| Char expansion times | 7.7 | 10.7 |

Char expansion times are the result of dividing the char thickness by the original DFT of the panel.

The results show an improvement on expansion and insulation efficiency with the hybrid technology.

The film shows shrinkage due to the water evaporation at high DFTs. Hold up is high for an aqueous product.

### Spray tests

The formulation of Example 25 (WBMS-1) was manufactured in a 10L batch and was sprayed through a Graco MarK V single leg electric spray unit using similar configuration that for spraying commercial WB intumescent coatings with positive results. It was sprayed using a spraying tip of 0.019 inches thick with proper atomization obtaining more than 2mm WFT hold up and the spray unit was cleaned easily with water and soap as cleaning solvent. No VOCs were observed in the whole process.

The result of drying at high temperature (50°C) was also positive.

The Examples clearly show, that the bond strength of the inventive examples is significantly higher than that of the pure alkoxy-silane based system (Comparative Example 1) and the pure aqueous system (Comparative Example 2).

## Claims

1. A composition for an intumescent coating comprising:
(A) a binder system, comprising
(a1) an aqueous polymer dispersion; and
(a2) an alkoxy-functional organic polymer, which contains an alkoxy-functional silane group having the general formula (I), terminated and/or as side group along the polymer chain,
-Si(R¹)ₘ(OR²)₃₋ₘ (I),
in which
R¹ represents a linear or branched C₁-C₁₆ alkyl group,
R² represents a linear or branched C₁-C₆ alkyl group, and
m is a whole number from 0 to 2; and
(B) an intumescent composition.

2. Fire-protection composition according to claim 1, wherein the alkoxy-functional organic polymer a2) comprises a basic skeleton, which is at least one member selected from the group consisting of an alkyl chain, a polyether, polyester, polyether ester, polyamide, polyurethane, polyester urethane, polyether urethane, polyether ester urethane, polyamide urethane, polyurea, polyamine, polycarbonate, polyvinyl ester, polyacrylate, polyolefin, polyisobutylene, polysulfide, natural rubber, neoprene, phenolic resin, epoxy resin, and melamine.

3. Composition according to claim 2, wherein the basic skeleton is a polyether or a polyurethane.

4. Composition according to any one of the preceding claims, wherein the alkoxysilane-functional polymer a2) contains at least 2 alkoxy-functional silane groups.

5. Composition according to any one of the preceding claims, wherein the polymer dispersion a1) is based on a copolymer.

6. Composition according to claim 5, wherein the copolymer is obtainable by reacting two or more monomers, whereas the monomers are selected from the group consisting of vinyl esters, an α-olefin, and an ester of ethylenically unsaturated carboxylic acids.

7. Composition according to claim 6, wherein the copolymer is obtainable by reacting (i) at least one vinyl ester and at least one ester of an ethylenically unsaturated carboxylic acid, (ii) at least one vinyl ester and at least one α-olefin, or (iii) at least one α-olefin and at least one ester of an ethylenically unsaturated carboxylic acid.

8. Composition according to claim 6 or 7, wherein the vinyl ester in (i) and (ii) is a combination of a first vinyl ester and a second vinyl ester, which second vinyl ester is different from the first vinyl ester.

9. Composition according to claim 8, wherein the first vinyl ester is selected from the group consisting of vinyl acetate, vinyl propionate and vinyl laurate.

10. Composition according to claim 8, wherein the second vinyl ester is a vinyl ester of neoalkanoic acid.

11. Composition according to claim 10, wherein the vinyl ester of neoalkanoic acid is one of formula (I) 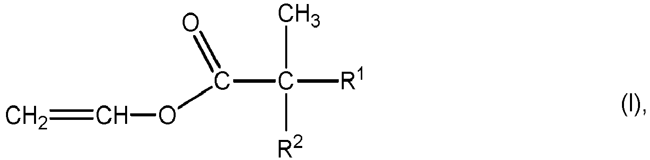 wherein R¹ and R² are alkyl groups, which together contain 6 to 8 carbon atoms.

12. Composition according to any one of claims 6 to 11, wherein said α-olefin is selected from the group consisting of ethylene, vinyl chloride, and styrene.

13. Composition according to any one of claims 6 to 11, wherein said ester of ethylenically unsaturated carboxylic acids is selected from C₁-C₁₂-alkyl (meth)acrylates.

14. Composition according to any one of the preceding claims, wherein the intumescent composition (B) comprises at least one compound selected from the group consisting of a dehydrogenation catalyst, a propellant, a carbon supplier, organic fillers, inorganic fillers, a thermally expandable compound, and a mixture of two or more compounds thereof.

15. Composition according to claim 14, wherein the intumescent composition (B) comprises a combination of a dehydrogenation catalyst, a propellant and a carbon supplier.

16. Composition according to any of the preceding claims, wherein the composition additionally comprises (C) a further filler.

17. Composition according to any of the preceding claims, wherein the composition additionally comprises (D) a further additive.

18. Composition according to any one of the preceding claims, wherein the composition is a fire-protection composition.

19. Composition according to any of the preceding claims, wherein the composition is a two-component composition with a first component and a second component.

20. Composition according to claim 19, wherein the first component contains the aqueous polymer dispersion (a1) and the intumescent composition (B) and the second component contains the alkoxy-functional organic polymer (a2).

21. Composition according to claim 20, wherein the first and/or the second component additionally contain the further filler (C) and/or the further additive (D).
